# EUROPÄISCHE PATENTSCHRIFT

(11) **EP 0 994 817 B1**
(45) Veröffentlichungstag und Bekanntmachung des Hinweises auf die Patenterteilung: **29.06.2005**
(21) Anmeldenummer: 99948549.3
(22) Anmeldetag: 05.05.1999
(51) Int. Cl.: B65G 1/00

(54) **VORRICHTUNG ZUM GRUPPIEREN ODER VEREINZELN VON ARTIKELN**
DEVICE FOR GROUPING OR ISOLATING ARTICLES
DISPOSITIF POUR GROUPER OU ISOLER DES ARTICLES

(30) Priorität: 05.05.1998 DE 29807979 U
(43) Veröffentlichungstag der Anmeldung: 26.04.2000
(73) Patentinhaber: KRONES AG, 93068 Neutraubling (DE)
(72) Erfinder: MEYER, Erwin, D-46499 Hamminkeln (DE); DIEDERICHS, Helmut, D-46419 Isselburg (DE); EVANS, Silke, D-47623 Kevelaer (DE); ELSPERGER, Stefan, D-83083 Rudering (DE)
(86) Internationale Anmeldenummer: PCT/EP1999/003061
(87) Internationale Veröffentlichungsnummer: WO 1999/057042

(56) Entgegenhaltungen:
- WO-A-99/03766
- DE-A- 4 439 728
- GB-A- 2 090 804

## Beschreibung

Die Neuerung betrifft eine Vorrichtung zum Gruppieren oder Vereinzeln von Artikeln gemäß dem Oberbegriff des Anspruchs 1.

Vorrichtungen dieser Art werden im Einlaufbereich von Verpackungsmaschinen benötigt, um aus in geschlossenen Reihen zulaufenden Artikelströmen Artikelgruppen oder einzelne Artikel abzutrennen, die nachfolgend in Kästen, Kartons oder Schrumpffolie verpackt werden. Für diesen Zweck wurden bereits unterschiedliche Konstruktionen vorgeschlagen wie z.B. Gruppiereinrichtungen, die unter einer die Artikel zuführenden Förderbahn angeordnet und mit durch Spalte zwischen den einzelnen, die Förderbahn bildenden Förderbändern hindurchgreifenden Fingern zum Abtrennen von Artikelgruppen ausgerüstet sind (EP 0 485 937 B1). Neben der schlechten Zugänglichkeit der Gruppiermechanik werden auch die notwendigen Spalte zwischen den einzelnen Förderbändern als Nachteil empfunden, weil die Standsicherheit und Laufruhe der transportierten Artikel beeinträchtigt wird, Fremdkörper in die Gruppiermechanik fallen und Störungen verursachen können.

Aus GB 2 090 804 A ist eine mechanisch gesteuerte Vorrichtung zum Gruppieren von Flaschen bekannt, bei der die Betätigung von insgesamt zwei mit den Flaschen von unten in Eingriff bringbaren Fingerpaaren durch ein kurvengesteuertes Hebelgetriebe erfolgt. Sowohl die Horizontal- als auch Vertikalbewegung der Finger wird durch insgesamt vier Steuerscheiben, die allesamt auf ein und derselben Antriebswelle angeordnet sind, gesteuert. Ein voneinander unabhängiger Antrieb der Finger ist nicht möglich.

Außerdem sind auch seitlich an Förderbahnen angeordnete und in den Artikelstrom eingreifende Gruppiervorrichtungen bekannt, die allerdings sehr raumgreifend ausgeführt und nachteiligerweise nur für einspurige Artikelströme verwendbar sind (EP 0 447 123 B1, EP 0 126 553 B1, EP 0 400 295 A1).

Aus WO 99/03 766 ist eine Vorrichtung zum Stoppen einer einspurigen mit hoher Fördergeschwindigkeit bewegten Behälterreihe bekannt. Die vor dem Einlaufbereich einer Behälterbehandlungsmaschine angeordnete Vorrichtung besitzt ein zum Abstoppen der Behälterreihe dienendes Stoppelement und ein zweites Element zum Abstützen des rückwärtigen Endes des ungestoppt in die Behälterbehandlungsmaschine ablaufenden Teils der Behälterreihe. Damit soll ein Umfallen der letzten Behälter am Ende des ablaufenden Teils der ungebremsten Behälterreihe vermieden werden. Beide Elemente können nur gleichzeitig durch einen gemeinsamen Antrieb quer zur Förderrichtung mit den Behältern in Eingriff gebracht werden.

Ein weiterer Nachteil der bekannten Vorrichtungen wird in der aufwendigen Umstellung auf unterschiedliche Artikelformate gesehen.

Aufgabe der Neuerung ist es, eine kompakte, gut zugängliche und flexibel verwendbare Vorrichtung zum Gruppieren oder Vereinzeln von Artikeln anzugeben.

Gelöst wird diese Aufgabe durch die kennzeichnenden Merkmale des Anspruchs 1.

Aufgrund der Verwendung von programmgesteuerten Antrieben für die Gruppiereinrichtung ist ein hoher Bedienungskomfort bei gleichzeitig äußerst kurzen Umstellzeiten für einen Artikelsortenwechsel gegeben. Unterschiedliche Einteil- bzw. Artikelgruppenlängen sind allein durch einen Programmwechsel oder -änderung stufenlos einstellbar.

Sind die zum Abtrennen der Artikelgruppen erforderlichen Anschlagdaumen gemäß einer vorteilhaften Weiterbildung in die Führungsgeländer integriert, erfolgt mit der ohnehin notwendigen Geländerverstellung zugleich die Anpassung der

Gruppiervorrichtung, wenn eine Umstellung auf andere Artikelabmessungen notwendig wird.

Günstigerweise ist auch bei einer mehrbahnigen Ausführung ein guter Zugriff von oben gegeben und es wird unterhalb der Förderbahn kein Raum für die Gruppiervorrichtung benötigt. Nachfolgend werden Ausführungsbeispiele anhand der Figuren erläutert. Es zeigt:
- Fig. 1: eine Seitenansicht einer Folienpackmaschine,
- Fig. 2: eine Draufsicht der Maschine nach Fig. 1 in schematischer Darstellung,
- Fig. 3: eine Vorderansicht der Maschine aus der Blickrichtung X in Fig. 1,
- Fig. 4: die Seitenansicht der Gruppierstation der Maschine nach Fig. 1 in vergrößerter Darstellung,
- Fig. 5: die Draufsicht der Gruppierstation nach Fig. 2 in vergrößerter Darstellung,
- Fig. 6: eine vergrößerte Detailansicht aus der Seitenansicht der Fig. 4,
- Fig. 7: einen Schnitt entlang der Linie A-A in Fig. 6,
- Fig. 8: eine Draufsicht auf eine Führungsgasse der Gruppierstation nach Fig. 6 in vergrößerter Darstellung,
- Fig. 9.1 bis 9.6: die Führungsgasse der Gruppierstation nach Fig. 8 in verschiedenen Funktionsstellungen,
- Fig. 10: eine Draufsicht auf eine Führungsgasse einer Vereinzelungsstation für Gebinde,
- Fig. 11.1 bis 11.6: die Führungsgasse der Vereinzelungsstation für Gebinde nach Fig. 10 in verschiedenen Funktionsstellungen,
- Fig. 12: eine Draufsicht einer zweiten Ausführung von Anschlagdaumen mit einer mechanischen Steuerung und
- Fig. 13.1 bis 13.5: die Anschlagdaumen nach Fig. 12 in verschiedenen Funktionsstellungen.

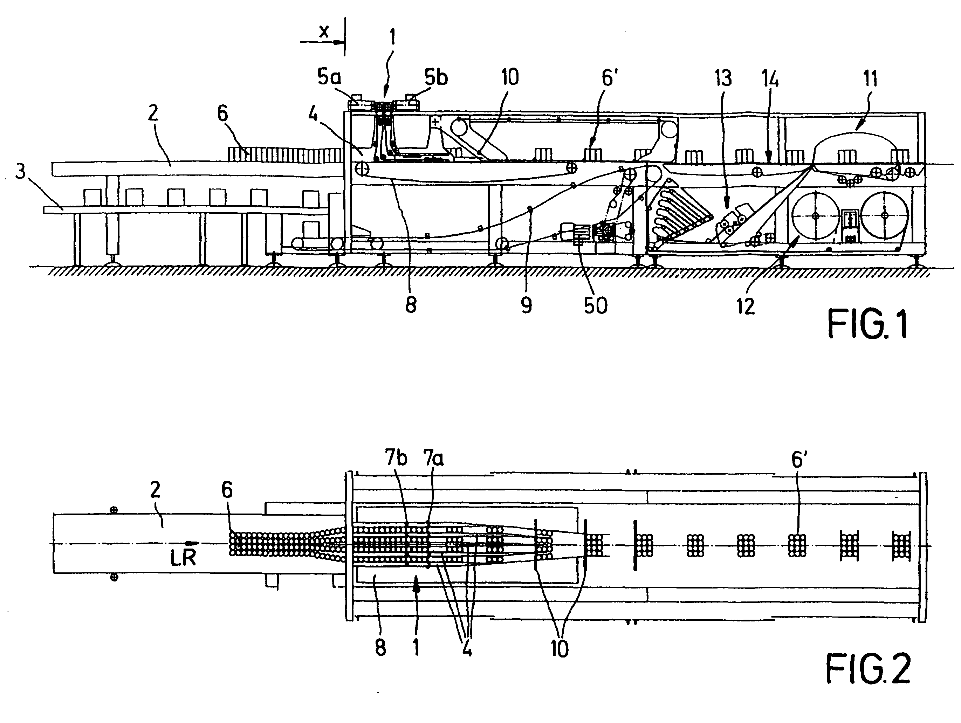

Aus der Seitenansicht der in Fig. 1 abgebildeten Folienpackmaschine sind deren wichtigsten Baugruppen erkennbar. Linker Hand befindet sich ein Artikelzuförderer 2 mit einem darunter angeordneten Kartonstapelförderer 3, die beide gleichsinnig kontinuierlich antreibbar sind. Der Artikelförderer führt zu einer Gruppierstation 1 mit Führungsgeländern 4, die Gassen für einspurige Artikelreihen bilden. Oberhalb der Führungsgeländer 4 befinden sich zwei Servomotoren 5a, 5b zum gesteuerten Antreiben von mit den Artikeln 6 in Eingriff bringbaren Anschlagdaumen 7a, 7b der Gruppierstation. Unterhalb der Führungsgeländer befindet sich ein eine im wesentlichen geschlossene, d.h. spaltfreie Förderebene bildendes Förderband 8, das sich stumpf an den Artikelzuförderer 2 anschließt und mit diesem fluchtet. Unter diesem Förderband 8 ist ein schräg von unten nach oben ansteigendes Fördermittel 9 zum Zuführen von einzelnen, separierten Kartonzuschnitten angeordnet.

In Transportrichtung des Förderbandes 8 gesehen folgt auf die Gruppierstation 1 ein Stabförderer 10, der die vom Artikelstrom mit bestimmten Zwischenabständen abgetrennten Artikelgruppen 6' übernimmt und unter Beibehaltung der Abstände kontinuierlich auf von unten herangeführte, ebene Kartonzuschnitte (nicht dargestellt) aufschiebt. Diese werden dann im weiteren Verlauf zu sogenannten Multipacks o. dgl. aufgefaltet und in einer Einschlagstation 11 mit Schrumpffolie umhüllt. Im Bereich unter der Einschlagstation befindet sich ein Folienspeicher 12 mit einer Folienzuführvorrichtung 13. Die Folie wird in an sich bekannter Weise -ähnlich wie zuvor die Kartonzuschnitte - schräg von unten durch einen Querspalt im Artikelgruppenförderer 14 zwischen die Unterseite der Multipacks und der Förderoberseite eingeführt und danach um die einzelnen Multipacks herumgelegt. Zum Anschrumpfen erfolgt eine Überführung der eingehüllten Multipacks in einen nicht dargestellten Schrumpftunnel. Alle zuvor genannten Baugruppen der Maschine werden -mit Ausnahme der Gruppierstation- durch einen gemeinsamen Maschinenantrieb 50 geschwindigkeits- und stellungssynchron angetrieben.

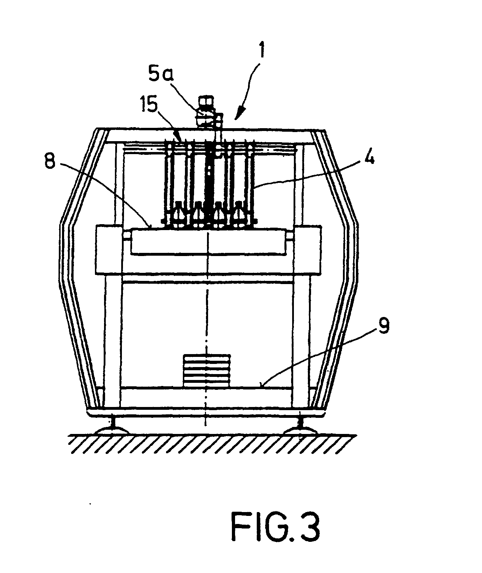

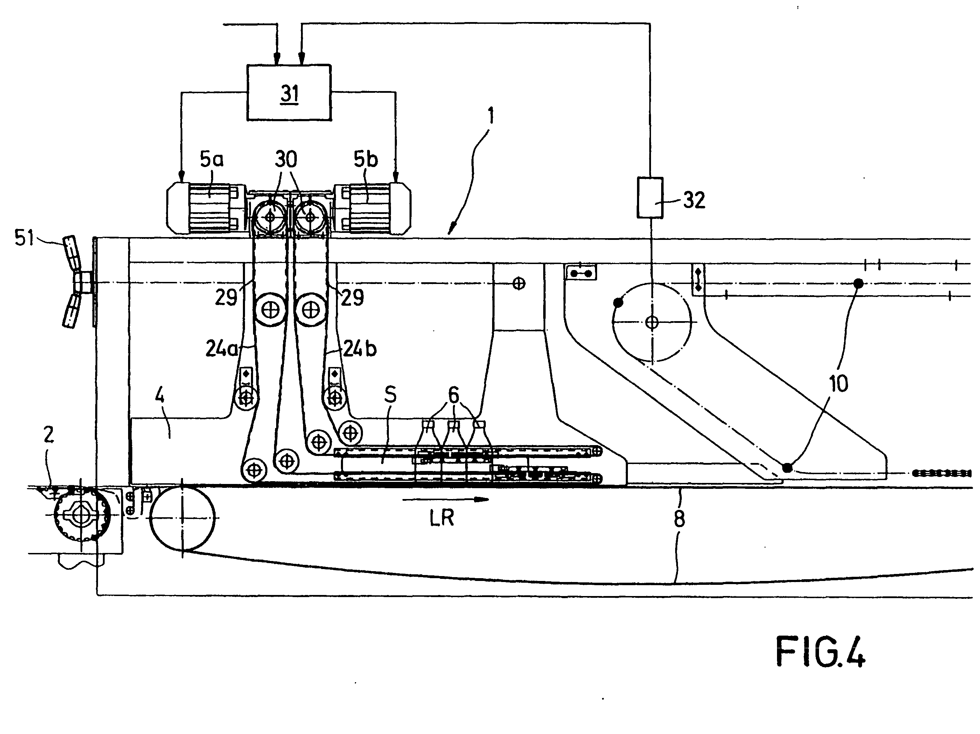

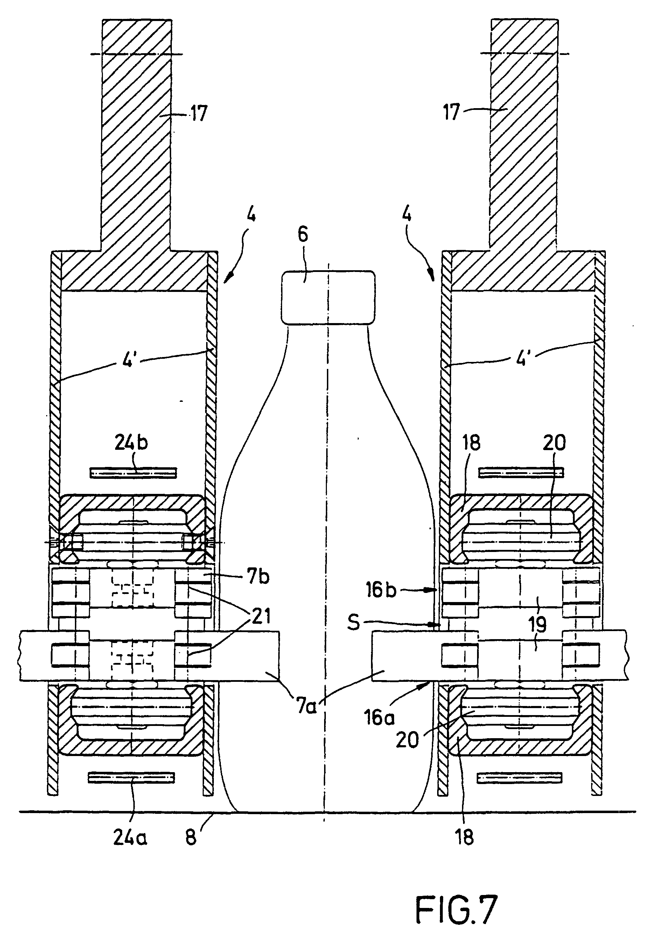

Wie aus der Fig. 3 zu erkennen ist, sind die Führungsgeländer 4 an mit Abstand über dem Förderband 8 positionierten Quertraversen 15 hängend querverstellbar gelagert. Zur Querverstellung ist eine Handhabe 51 vorgesehen (Fig. 4). In jedem der Führungsgeländer 4 befinden sich jeweils zwei unabhängig voneinander in verschiedenen Ebenen verfahrbare Wagen 16a, 16b mit gesteuert verschwenkbaren Anschlagdaumen 7a, 7b. Der mechanische Aufbau der Wagen 16a, 16b ist am besten aus der Fig. 7 erkennbar. Wie aus dieser Schnittdarstellung ersichtlich, bestehen die Führungsgeländer 4 jeweils aus zwei mit Abstand senkrecht zum Förderband 8 ausgerichteten, parallelen Platten 4'. Am oberen Ende befindet sich zwischen den genannten Platten ein Geländerhalter 17 und darunter zwei horizontal parallel verlaufende Laufschienen 18 mit einem im wesentlichen U-förmigem Querschnitt, wobei die offenen Seiten der Laufschienen zueinanderweisen und die Innenflächen ihrer Schenkelabschnitte eine Profilierung aufweisen. Im Bereich zwischen den beabstandeten Laufschienen sind die Platten 4 mit horizontalen Schlitzen S versehen. Trotz der Schlitze ist die Stabilität der Platten durch die zugleich als Distanzhalter und Aussteifung dienenden Laufschienen gewährleistet, die mit den Platten verbunden sind.

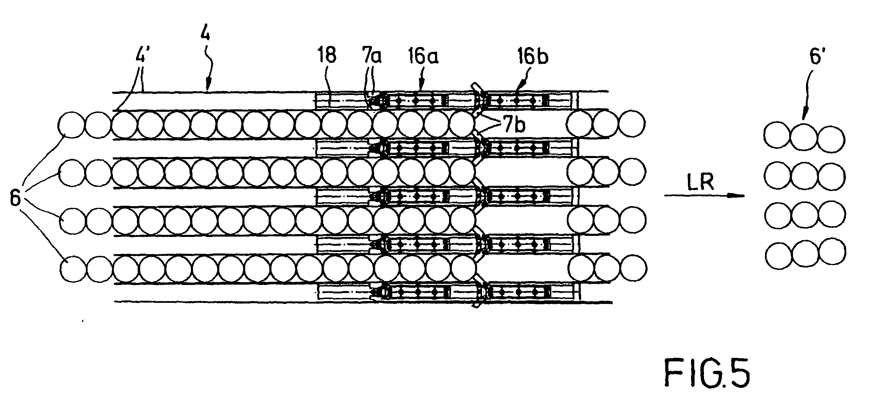

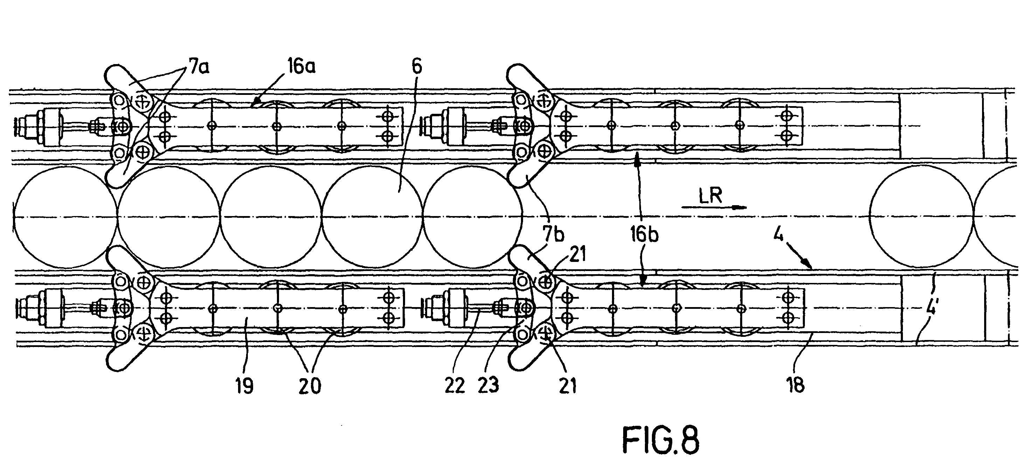

Jeder der Wagen 16a, 16b besteht aus einem länglichen Grundkörper 19 mit drei in einer Reihe angeordneten, frei drehbar gelagerten Rollen 20, die in der Profilierung der Laufschienen 18 formschlüssig geführt sind, und trägt an einem Ende zwei um vertikale Lagerachsen 21 in entgegengesetzte Richtungen schwenkbar gelagerte Anschlagdaumen 7a bzw. 7b. Diese Anschlagdaumen können von einem Betätigungsorgan 22 (Pneumatikzylinder oder dgl.) über einen Kniehebelmechanismus 23 (Fig. 8) gesteuert aus einer Bereitschaftsstellung in eine Arbeitsstellung und umgekehrt überführt werden. In der Fig. 7 befinden sich die Anschlagdaumen 7b der beiden oberen Wagen 16b in der Bereitschaftsstellung, d.h. vollständig innerhalb der Führungsgeländer 4, während die Anschlagdaumen 7a der unteren Wagen 16a die Arbeitsstellung einnehmen, d.h. seitlich durch die Schlitze S der Platten 4' in die durch die Führungsgeländer gebildeten Führungsgassen hineinragen (siehe auch Fig. 5).

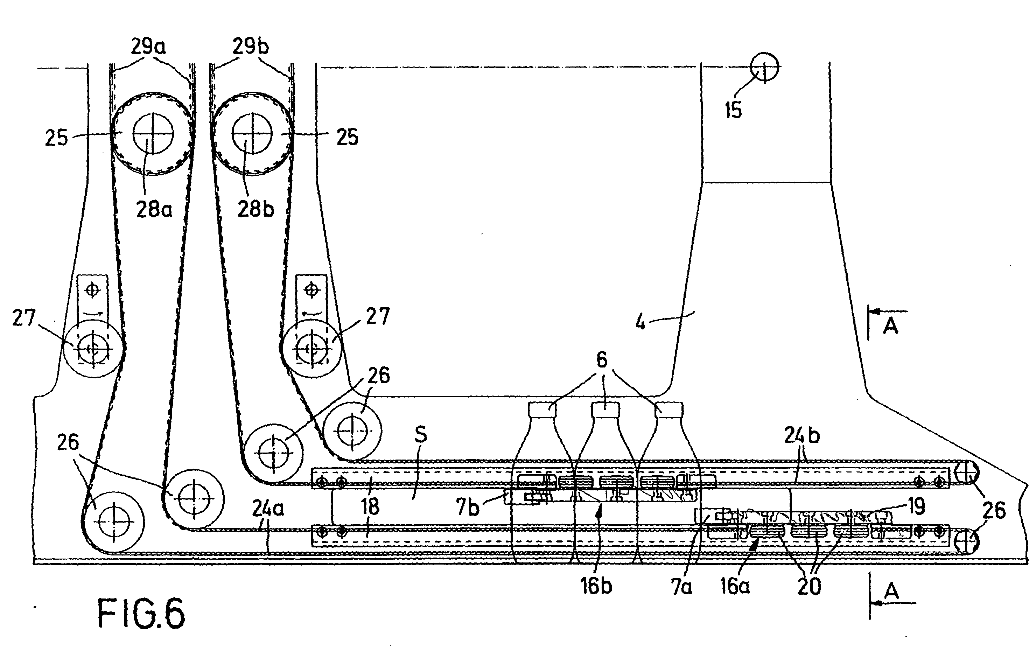

Zum Vor- und Zurückfahren der Wagen 16a, 16b in den Laufschienen 18 ist für jeden Wagen ein eigener Zahnriemen 24a bzw. 24b vorgesehen, dessen Breite so bemessen ist, dass er zwischen den Platten 4' eines Führungsgeländers Platz findet (Fig. 7). Ein Zahnriemen ist jeweils über ein Antriebsrad 25, drei Umlenkräder 26 und eine Spannrolle 27 geführt, die im Führungsgeländer 4 gelagert sind und deren Anordnung am besten aus den Fig. 4 und 6 ersichtlich ist. Die Zahnriemenenden sind am vorderen bzw. hinteren Ende eines Wagens 16a, 16b befestigt. Die Riemen 24b aller oberen Wagen 16b sind einer ersten Antriebswelle 28b zugeordnet und die der unteren Wagen 16a einer zweiten Antriebswelle 28a. Allen Zahnriemen ist jeweils ein als Zahnriemenrad ausgebildetes Antriebsrad 25 auf der ersten bzw. zweiten Antriebswelle zugeordnet, wobei diese Zahnriemenräder bei einer Formatumstellung auf einen neuen Artikeldurchmesser zusammen mit den Führungsgeländern 4 quer zur Förderrichtung verschiebbar sind, d.h. die Zahnriemenräder 25 sind axial verschiebbar auf ihrer entsprechenden Antriebswelle 28a bzw. 28b formschlüssig geführt.

Jedes Führungsgeländer 4 bildet also eine komplette Einheit, so dass auch ohne weiteres noch nachträglich zusätzliche Führungsgassen durch Hinzufügen von Geländern mit geringem Aufwand gebildet werden können. Die bereits erwähnten Servoantriebe 5a, 5b treiben die erste bzw. zweite Antriebswelle 28a, 28b über einen endlosen Zahnriemen 29 und entsprechende Zahnriemenräder 30 an (siehe Fig. 4). Gesteuert werden die Servoantriebe 5a, 5b durch ein Servosteuermodul der Maschinensteuerung oder eine mit dieser in Verbindung stehenden separaten Servosteuerung 31, so dass in Zusammenarbeit mit einem Absolutwertgeber 32 in der Maschine ein geschwindigkeits- und stellungssynchroner Antrieb der Gruppiereinrichtung 1 zu den übrigen Baugruppen der Maschine möglich ist. Um eine komfortable Umstellung auf verschiedene Artikel- oder Gebindegrößen bzw. Gruppenlängen in kürzester Zeit vornehmen zu können, kann die Steuerung 31 mit einem anwählbaren Programmspeicher für die verschiedenen Artikelsorten ausgestattet sein. Die Steuerung kann aber auch auf eine manuell vorzunehmende Eingabe der gewünschten Gruppen- bzw. Gebindelänge eingerichtet sein.

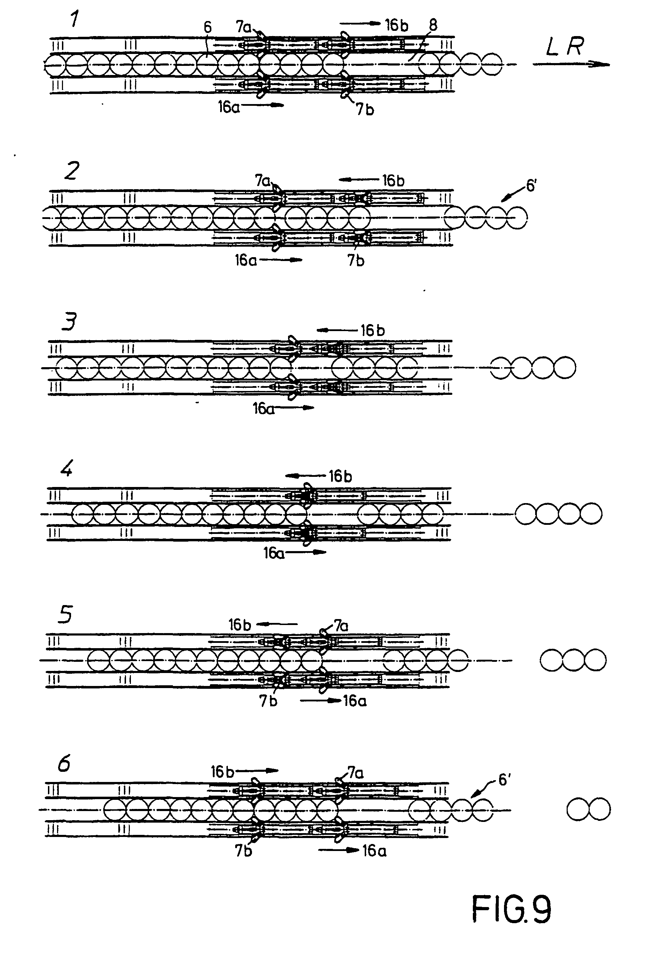

In Verbindung mit der Figurenfolge 9.1 bis 9.6 wird nachfolgend die Funktionsweise der Gruppierstation 1 der in den Figuren 1 bis 8 dargestellten und bisher vom mechanischen Aufbau her beschriebenen Maschine zum Verpacken von Flaschen in Multipacks erläutert. Der Einfachheit halber ist in der Figurenfolge nur jeweils eine einzelne Führungsgasse der mehrspurigen Gruppierstation in den verschiedenen Stadien eines vollständigen Gruppierzyklusses dargestellt. Es versteht sich jedoch in Zusammenschau mit den Figuren 2 und 5, dass der nachfolgend beschriebene Ablauf bei einer mehrspurigen Gruppierstation parallel in allen Führungsgassen zeit- bzw. stellungsgleich erfolgt. Die in Fig 9.1 gezeigte Ausgangsstellung entspricht exakt der in Fig. 8 vergrößert dargestellten Situation. Die Anschlagdaumen 7b des Wagens 16b in der rechten Bildhälfte befinden sich in der Arbeitsstellung, d.h. sie sind nach außen, die Schlitze S der Führungsgeländer 4 durchgreifend gespreizt und ragen in die Führungsgasse hinein. Da die Wagen 16b in dieser Phase mit einer etwas geringeren Geschwindigkeit in die mit LR bezeichnete Laufrichtung als das die Flaschen 6 tragende Förderband 8 durch den Servoantrieb 5b mit einem bestimmten Geschwindigkeitsverhältnis synchron zum Förderband bewegt werden, liegt die vorderste Flasche 6 der lückenlosen Flaschenreihe an den Anschlagdaumen 7b an und wird von diesen geringfügig relativ zum Förderband 8 gebremst, so dass zwischen den Flaschenböden und dem Förderband Schlupf vorhanden ist. Im gleichen Augenblick sind die Anschlagdaumen 7a der sich in der linken Bildhälfte befindenden, ebenfalls in Laufrichtung LR vom Servoantrieb 5a bewegten Wagen 16a soeben aus der Bereitschaftsstellung nach außen gespreizt worden, wobei diese Anschlagdaumen 7a nun eine Anschlagfläche für die stromaufwärtigen Flaschen bilden.

Unmittelbar danach werden entsprechend der Figur 9.2 die Anschlagdaumen 7b der rechten Wagen 16b in die Führungsgeländer 4 eingeklappt, d.h. in die Bereitschaftsstellung überführt, wodurch die stromabwärts der Anschlagdaumen 16a gebildete, vier Flaschen umfassende Flaschengruppe 6' fortan ohne Schlupf ungebremst der höheren Fördergeschwindigkeit des reibschlüssig an den Flaschen angreifenden Förderbandes 8 folgt und dadurch ein sich laufend vergrößernder Zwischenabstand zu den nachfolgenden, durch die Anschlagdaumen 7a gebremsten und deshalb langsamer nachfolgenden Flaschenreihe entsteht. Gleichzeitig wird der Servoantrieb 5b reversiert, die Wagen 16b entgegen der Laufrichtung LR der Flaschen und gegensinnig zu den Wagen 16a beschleunigt stromaufwärts verfahren, während die anderen beiden Wagen 16a nach wie vor gleichförmig von ihrem Servoantrieb 5a stromabwärts bewegt werden. Bei diesem in den Figuren 9.2 bis 9.5 dargestellten gegenläufigen Bewegungsablauf überqueren die oberen Wagen 16b die unteren Wagen 16a und erreichen schließlich eine stromaufwärtige Position, bei der die Bewegungsrichtung der Wagen 16b durch den zugeordneten Servoantrieb 5b erneut umgekehrt wird, d.h. die Wagen 16b werden wieder in Laufrichtung LR beschleunigt und die Anschlagdaumen 7b nach außen in die Arbeitsstellung zwischen zwei benachbarte Flaschen gespreizt, so dass wieder eine Flaschengruppe, bestehend aus vier Einzelflaschen, vom Flaschenstrom abgeteilt wird. Diese Anschlagdaumen 7b werden ebenfalls wieder mit geringerer Geschwindigkeit als das Förderband 8 parallel zu diesem bewegt. In der Zwischenzeit hat die vorhergehend vom Anschlagdaumenpaar 7b gebremste Flaschengruppe 6' sich so weit vom langsamer nachfolgenden Flaschenstrom entfernt, dass das für den auf die Gruppierstation 1 folgenden Stabförderer 10 notwendige Teilungsmaß erreicht worden ist (Fig. 9.6). Während dem gesamten Gruppiervorgang befindet sich immer mindestens einer der Anschlagdaumen in der Arbeitsstellung, wodurch ein ruckfreies und jederzeit kontrolliertes Einteilen der Flaschen sichergestellt ist.

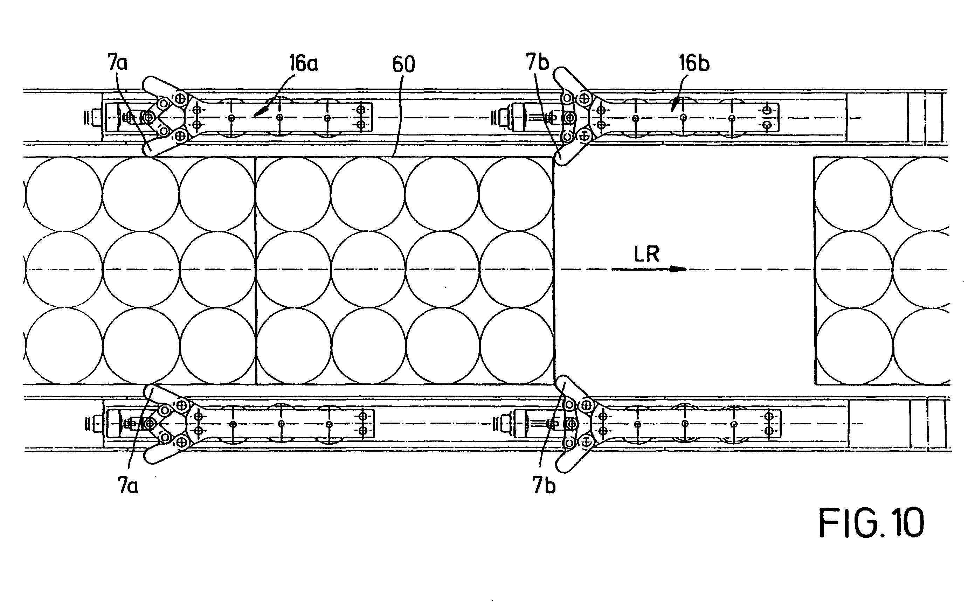

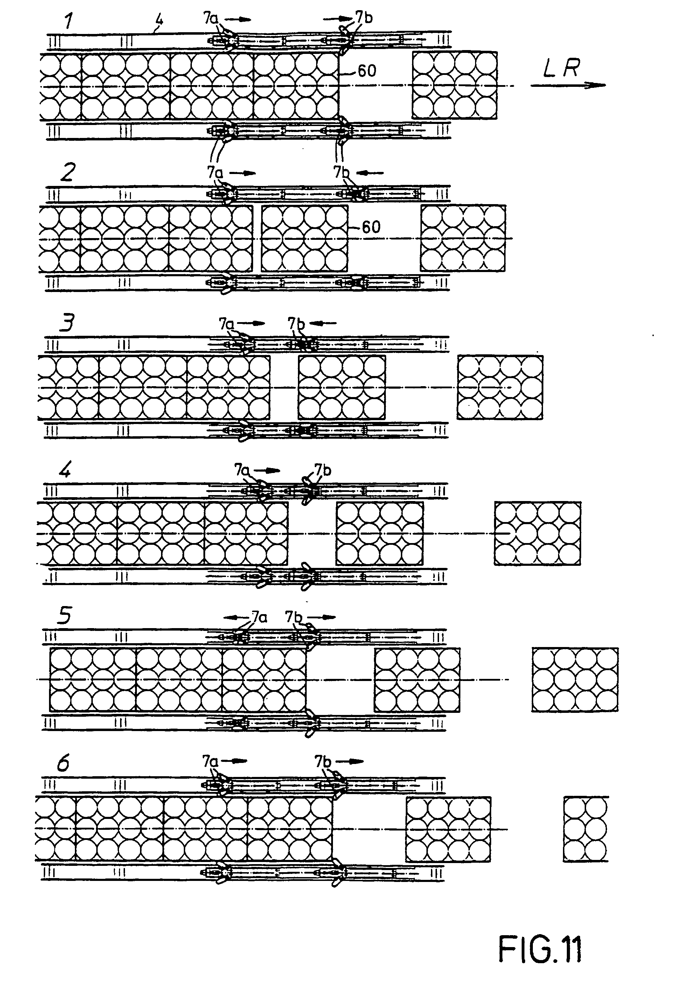

Ein zweiter Anwendungsfall wird in den Figuren 10 und 11 gezeigt. Hier werden die steuerbaren Anschlagdaumen 7a und 7b zum Vereinzeln von Gebinden, z.B. Multipacks, Kartons oder dgl., eingesetzt. Da diese Gebinde einen rechteckigen Querschnitt mit ebenen Seitenflächen aufweisen und bei einem Stau wegen der aneinander liegenden Seitenflächen keine Lücken zum Eingreifen für die Anschlagdaumen vorhanden sind, wird das stromaufwärtige Anschlagdaumenpaar 7a als Klemmhebel zum seitlichen Einspannen eines Gebindes 60 benutzt, während das stromabwärtige Anschlagdaumenpaar 7b, wie beim vorherigen Ausführungsbeispiel zum Gruppieren von Flaschen, als Anschlag für das vorderste Gebinde 60 des zulaufenden Gebindestroms dient (Fig. 10).

Die erste Abbildung der Figurenfolge 11.1 bis 11.6 zeigt die Ausgangsstellung entsprechend der Fig. 10, d.h. das vorderste Gebinde 60 des lückenlosen Gebindestroms liegt an den Anschlagdaumen 7b an, während das darauffolgende Gebinde reibschlüssig zwischen den Anschlagdaumen 7a eingespannt ist.

In dieser Situation werden beide Anschlagdaumenpaare 7a und 7b in Förderrichtung LR mit geringerer Geschwindigkeit vorwärtsbewegt als das die Gebinde reibschlüssig tragende Förderband, so dass Schlupf zwischen diesem und den Gebinden auftritt. Danach werden die vorauslaufenden Anschlagdaumen 7b nach innen in die Bereitschaftsstellung geklappt, woraufhin das freigegebene Gebinde auf die Förderbandgeschwindigkeit beschleunigt wird und dabei Abstand zum nachfolgenden Gebinde gewinnt. Das Maß der Abstandsvergrößerung wird von der genannten Geschwindigkeitsdifferenz der Anschlagdaumen und des Förderbandes und der Zeitspanne zwischen der Freigabe eines Gebindes bis zur Freigabe des darauffolgenden Gebindes bestimmt.

Entsprechend der Darstellung in Fig. 11.3 wird das außer Eingriff gebrachte Anschlagdaumenpaar 7b entgegen der Gebindebewegung stromaufwärts zurückgefahren, während das zweite Anschlagdaumenpaar 7a unverändert stromabwärts gleitet. Danach werden die Anschlagdaumen 7b in die mittlerweile entstandene Lücke zwischen den beiden Gebinden in die Arbeitsstellung gespreizt und gleichzeitig die Bewegungsrichtung der Anschlagdaumen 7b wieder in die stromaufwärtige Richtung umgekehrt, sobald die Stirnseite des nachfolgenden Gebindes mit den Anschlagdaumen 7b zur Anlage kommt (Fig. 11.4 und 11.5).

Erst dann werden die Anschlagdaumen 7a außer Eingriff gebracht, d.h. in die Bereitschaftsstellung nach innen geklappt, stromaufwärts zum nächsten Gebinde gefahren, woraufhin nach einer erneuten Bewegungsrichtungsumkehr in die stromabwärtige Richtung die Anschlagdaumen 7a wieder in die Arbeitsstellung geschwenkt werden und dabei das Gebinde seitlich einspannen (Fig. 11.5 und 11.6).

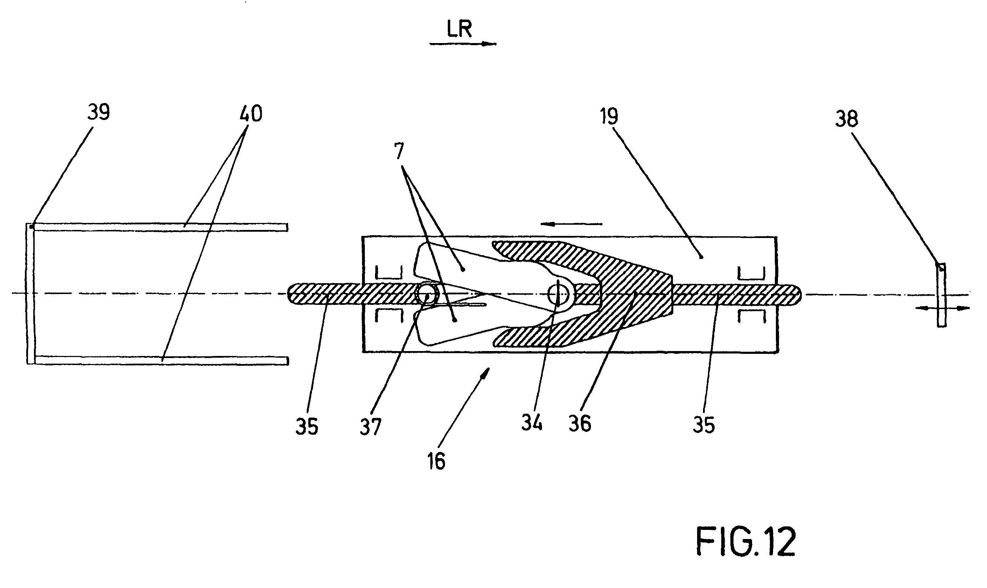

Die Fig. 12 zeigt eine rein mechanisch arbeitende Alternative zur Steuerung der Arbeits- und Bereitschaftsstellung der Anschlagdaumen. Das gezeigte Anschlagdaumenpaar 7 ist mit einem Ende auf einem Bolzen 34 schwenkbar gelagert, der auf dem Grundkörper 19 des Wagens 16 befestigt ist. Eine auf dem Grundkörper in axialer Richtung parallel zur Laufrichtung LR verschiebbar geführte Stößelstange 35 trägt einen gabelartig ausgebildeten Nockenkörper 36 und eine die Anschlagdaumen permanent nach außen in die Arbeitsstellung spreizende Drehfeder 37. Sowohl das stromaufwärtige- als auch stromabwärtige Ende der Stößelstange 35 überragen seitlich den Grundkörper 19.

Am Verfahrweg des Wagens 16 befinden sich zwei Anschläge, wobei zumindest der stromabwärtige Anschlag 38 längs zur Laufrichtung LR verstellbar ist. Aufgrund zweier paralleler Schenkel 40 besitzt der stromaufwärtige Anschlag 39 eine im wesentlichen U-förmige Gestalt, wobei der Wagen 16 zwischen die beiden Schenkel einführbar ist, wenn sich die Anschlagdaumen 7 in der Bereitschaftsstellung befinden.

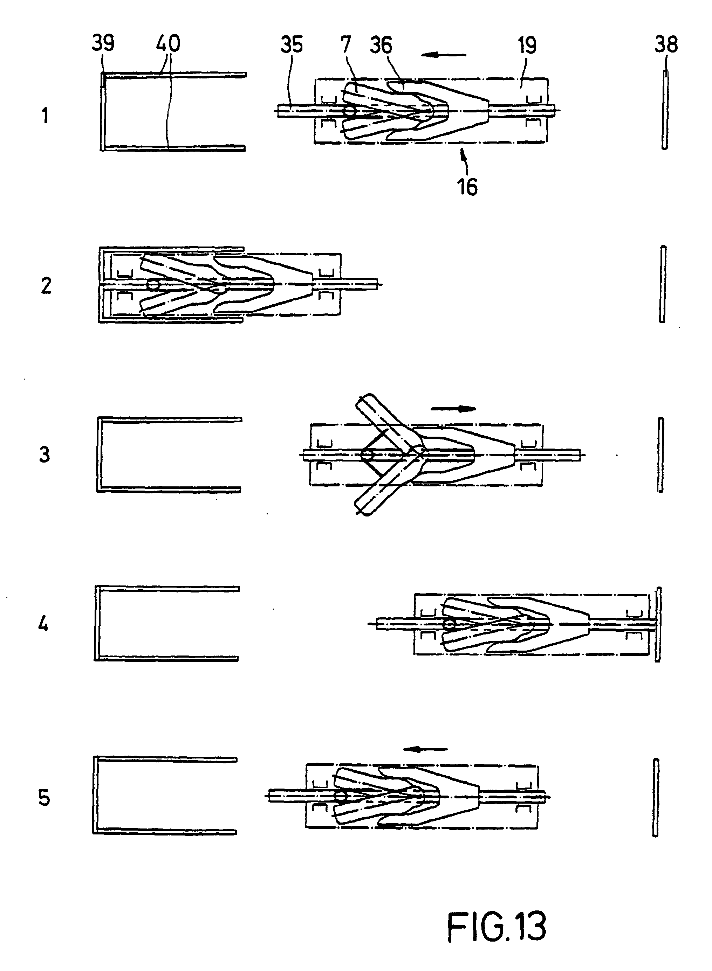

In der Fig. 13.1 befinden sich die Anschlagdaumen 7 in der Bereitschaftsstellung, bedingt durch den gabelförmigen Nockenkörper 36, der die Anschlagdaumen teilweise seitlich umfaßt und zusammendrückt. Sobald das linke, d.h. stromaufwärtige Ende der Stößelstange 35 den Anschlag 39 berührt, wird die Bewegung des Nockenkörpers 36 beendet, während der Wagen 16 mit den Anschlagdaumen 7 noch weiter verfahrbar ist, wodurch die Anschlagdaumen vom Nockenkörper freigegeben, aber nun von den Schenkeln 40 des Anschlags 39 am Ausklappen gehindert werden (Fig. 3.2).

Wird nun die Antriebsrichtung des Wagens 16 durch den zugeordneten Servorantrieb umgekehrt, so können die Anschlagdaumen 7 nach dem Verlassen der Schenkel 40 ungehindert federbeaufschlagt nach außen in die Arbeitsstellung gespreitzt werden (Fig. 13.3), so lange, bis das rechte, d.h. stromabwärtige Ende der Stößelstange 35 auf den Anschlag 38 trifft, so dass die Anschlagdaumen 7 in den gabelartigen Nockenkörper 36 gleiten und dabei in die Bereitschaftsstellung nach innen eingeklappt werden (Fig. 13.4). Danach kann die Bewegungsrichtung des Wagens 16 erneut umgekehrt werden (Fig. 13.5), wodurch der geschilderte Ablauf von vorne beginnt. Durch Verstellen der Anschläge 38 und/oder 39 können die Steuerpunkte der Anschlagdaumen der jeweiligen Gruppen- oder Gebindelänge entsprechend angepasst werden.

Abweichend von der in den Figuren dargestellten Konstruktion können die Laufschienen für die Wagen auch oberhalb der zu gruppierenden Artikel angeordnet werden. In diesem Fall werden an den in den Laufschienen geführten Wagen nach unten ragende Stangen vorgesehen, die an ihren unteren Enden die Anschlagdaumen in Höhe der Artikel tragen.

## Patentansprüche

1. Vorrichtung (1) zum Gruppieren oder Vereinzeln von Artikeln (6), die in einer oder mehreren geschlossenen Reihen auf einem Förderband (8) oder dgl. transportiert und zum Weiterbehandeln einzeln oder gruppenweise auseinandergezogen werden, **dadurch gekennzeichnet, dass** wenigstens zwei unabhängig voneinander parallel zur Transportrichtung (LR) vor- und zurückverfahrbare Elemente (7a, 7b) vorhanden sind, die, unabhängig voneinander gesteuerte, mit den Artikeln (6) in oder außer Eingriff bringbar sind.

2. Vorrichtung nach Anspruch 1, **dadurch gekennzeichnet, dass** die Elemente (7a, 7b) bei einer Vorwärtsbewegung in Transportrichtung (LR) eine in die Transportbahn der Artikel (6) eingreifende Arbeitsstellung einnehmen und bei einer Rückwärtsbewegung auf der gleichen Bewegungsbahn entgegen der Transportrichtung in eine zu den Artikeln beabstandete Bereitschaftsstellung überführbar sind.

3. Vorrichtung nach Anspruch 1 oder 2, **dadurch gekennzeichnet, dass** bei einem mehrspurigen Artikelstrom jeweils wenigstens zwei unabhängig voneinander verfahrbare Elemente (7a, 7b) jeweils einer Förderspur zugeordnet sind.

4. Vorrichtung nach wenigstens einem der Ansprüche 1 bis 3, **dadurch gekennzeichnet, dass** an gegenüberliegenden Seiten einer Förderspur unabhängig voneinander verfahrbare Elemente (7a, 7b) angeordnet sind.

5. Vorrichtung nach wenigstens einem der Ansprüche 1 bis 4, **dadurch gekennzeichnet, dass** an einer Seite einer Förderspur wenigstens zwei Elemente (7a, 7b) in höhenmäßig versetzten Ebenen unabhängig voneinander vor-und zurückverfahrbar angeordnet sind.

6. Vorrichtung nach Anspruch 4 und 5, **dadurch gekennzeichnet, dass** an beiden gegenüberliegenden Seiten einer Förderspur jeweils zwei Elemente (7a, 7b) in zwei höhenmäßig versetzten Ebenen unabhängig voneinander verfahrbar angeordnet sind, wobei die jeweils in einer gemeinsamen Ebene gegenüberliegenden Elemente beider Seiten stellungssynchron antreibbar sind.

7. Vorrichtung nach wenigstens einem der Ansprüche 1 bis 6, **dadurch gekennzeichnet, dass** die wenigstens zwei Elemente (7a, 7b) durch voneinander unabhängige, reversierbare Antriebe (5a, 5b), vorzugsweise elektrische Servoantriebe, antreibbar sind.

8. Vorrichtung nach wenigstens einem der Ansprüche 1 bis 7, **dadurch gekennzeichnet, dass** zwei Gruppen von Elementen (7a, 7b) vorhanden sind, wobei jeder Gruppe ein eigener unabhängiger Antrieb (5a, 5b), vorzugsweise elektrischer Servoantrieb, zugeordnet ist, und alle einer Gruppe zugehörigen Elemente durch ihren Antrieb stellungsgleich synchron zueinander antreibbar sind.

9. Vorrichtung nach wenigstens einem der Ansprüche 1 bis 8, **dadurch gekennzeichnet, dass** die Transportbahn der Artikel festlegende Geländer (4) die Förderspuren bilden und die Elemente (7a, 7b) in den Geländern (4) verfahrbar gelagert sind.

10. Vorrichtung nach Anspruch 9, **dadurch gekennzeichnet, dass** sich die Elemente (7a, 7b) in ihrer Bereitschaftsstellung vollständig innerhalb der Geländer (4) befinden und in ihrer Arbeitsstellung zumindest teilweise aus den Geländern in die Transportbahn der Artikel (6) ragen.

11. Vorrichtung nach Anspruch 10, **dadurch gekennzeichnet, dass** die Elemente (7a, 7b) paarweise gemeinsam verfahrbar in einem Geländer (4) so angeordnet und gelagert sind, dass sie in der Arbeitsstellung aus den beiden voneinander wegweisenden Seiten eines Geländers (4) in die zwei zu dem Geländer parallelen Artikeltransportbahnen ragen.

12. Vorrichtung nach wenigstens einem der Ansprüche 1 bis 11, **dadurch gekennzeichnet, dass** die Elemente (7, 7a, 7b) auf parallel zur Transportbahn der Artikel (6) verfahrbaren Wagen (16, 16a, 16b) um eine vertikale Achse (21, 34) schwenkbar gelagert und daumenartig ausgebildet sind.

13. Vorrichtung nach Anspruch 12, **dadurch gekennzeichnet, dass** den Wagen (16, 16a, 16b) ein steuerbares Betätigungsorgan (22, 35, 36) zum Überführen der Elemente (7a, 7b) aus der Bereitschaftsstellung in die Arbeitsstellung und umgekehrt zugeordnet ist.

14. Vorrichtung nach Anspruch 12 und 13, **dadurch gekennzeichnet, dass** ein Wagen (16, 16a, 16b) jeweils zwei in entgegengesetzte Richtungen schwenkbar gelagerte Elemente (7a, 7b) trägt, die durch ein Getriebe (23, 37), gekoppelt und ein gemeinsames Betätigungsorgan (22, 35, 36) betätigbar sind.

15. Vorrichtung nach wenigstens einem der Ansprüche 1 bis 14, **dadurch gekennzeichnet, dass** Förderspuren durch die Transportbahn der Artikel (6) festlegende Geländer (4) gebildet werden, wobei die Geländer jeweils aus zwei parallel mit Abstand vertikal ausgerichteten Platten (4') bestehen, zwischen denen wenigstens eine horizontale Laufschiene (18) befestigt ist, auf der wenigstens ein steuerbare Elemente (7a, 7b) tragender Wagen (16a, 16b) mit Laufrollen (20) längsverfahrbar gelagert ist, und diese Platten dem Verfahrbereich der Elemente (8a, 7b) zugeordnete Schlitze (S) aufweisen.

16. Vorrichtung nach Anspruch 15, **dadurch gekennzeichnet, dass** zwei Laufschienen (18) mit Abstand parallel zwischen den Platten (4') befestigt sind, auf den Laufschienen an den zueinandner weisenden Seiten jeweils ein Wagen (16a, 16b) gelagert ist und sich die Schlitze (S) in den Platten (4') im Bereich zwischen den Laufschienen (18) befinden.

17. Vorrichtung nach Anspruch 15 oder 16, **dadurch gekennzeichnet, dass** jeder Wagen (16a, 16b) an einem eine geschlossene Schlaufe bildenden Zugmittel (24a, 24b) befestigt ist, das durch einen der Antriebe (5a, 5b) reversierbar antreibbar ist.

18. Vorrichtung nach wenigstens einem der Ansprüche 7 bis 17, **dadurch gekennzeichnet, dass** die Antriebe (5a, 5b) durch eine Steuerung (31) zu einer Verpackungsmaschine synchronisiert betreibbar sind, und die Einteillänge der Vorrichtung an der Steuerung (31) stufenlos einstellbar oder einprogrammierbar ist.

19. Vorrichtung nach Anspruch 13 oder 14, **dadurch gekennzeichnet, dass** die Bereitschaftsstellung und die Arbeitsstellung der Elemente (7a, 7b) durch in Förderrichtung (LR) beabstandete Anschläge (38, 39) bestimmt werden.

20. Vorrichtung nach Anspruch 19, **dadurch gekennzeichnet, dass** wenigstens einer der Anschläge (38, 39) parallel zur Transportbahn verstellbar ist.

## Claims

1. Device (1) for grouping or separating articles (6) transported in one or more closed rows on a conveyor belt (8) or the like and pulled apart individually or in groups for further treatment, **characterised by** at least two elements (7a, 7b) which can move backwards and forwards parallel to the direction of transport (LR) independently of one another and which, controlled independently of one another, can be brought into or out of engagement with the articles (6).

2. Device according to claim 1, **characterised in that** the elements (7a, 7b) assume a working position engaging in the transport path of the articles (6) during a forward movement in the direction of transport (LR) and can be transferred to a ready position at a distance from the articles during a backward movement on the same path of motion against the direction of transport.

3. Device according to claim 1 or claim 2, **characterised in that**, in the case of a multi-track article stream, at least two respective elements (7a, 7b) which can move independently of one another are associated with each conveying track.

4. Device according to at least one of claims 1 to 3, **characterised in that** elements (7a, 7b) which can move independently of one another are arranged on opposite sides of a conveying track.

5. Device according to at least one of claims 1 to 4, **characterised in that** at least two elements (7a, 7b) are arranged in vertically offset planes on one side of a conveying track in such a manner that they can move backwards and forwards independently of one another.

6. Device according to claims 4 and 5, **characterised in that** two respective elements (7a, 7b) are arranged in two vertically offset planes on the two opposite sides of a conveying track in such a manner that they can move independently of one another, wherein the respective elements situated opposite one another in one common plane can be driven in positional synchronism on both sides.

7. Device according to at least one of claims 1 to 6, **characterised in that** the at least two elements (7a, 7b) can be driven by reversible drives (5a, 5b) independent of one another, preferably electric servo drives.

8. Device according to at least one of claims 1 to 7, **characterised by** two groups of elements (7a, 7b), wherein each group has its own associated independent drive (5a, 5b), preferably electric servo drive, and all of the elements belonging to one group can be driven exactly in positional synchronism by their drives.

9. Device according to at least one of claims 1 to 8, **characterised in that** rails (4) defining the transport path of the articles form the conveying tracks and the elements (7a, 7b) are mounted to move in the rails (4).

10. Device according to claim 9, **characterised in that** the elements (7a, 7b) are situated completely within the rails (4) in their ready position and project at least partially from the rails into the transport path of the articles (6) in their working position.

11. Device according to claim 10, **characterised in that** the elements (7a, 7b) are arranged and mounted to move together in pairs in a rail (4) in such a manner that they project from the two sides of a rail (4) directed away from one another into the two article transport paths parallel to the rail in the working position.

12. Device according to at least one of claims 1 to 11, **characterised in that** the elements (7, 7a, 7b) are mounted on carriages (16, 16a, 16b) which can move parallel to the transport path of the articles (6) in such a manner that they can pivot about a vertical axis (21, 34), and are cam-like.

13. Device according to claim 12, **characterised in that** a controllable actuating member (22, 35, 36) for transferring the elements (7a, 7b) from the ready position to the working position and vice versa is associated with the carriage (16, 16a, 16b).

14. Device according to claims 12 and 13, **characterised in that** each carriage (16, 16a, 16b) carries two respective elements (7a, 7b) which are mounted to pivot in opposite directions, are coupled by a gear unit (23, 37) and can be actuated by a common actuating member (22, 35, 36).

15. Device according to at least one of claims 1 to 14, **characterised in that** conveying tracks are formed by rails (4) defining the transport path of the articles (6), the rails each consisting of two plates (4) aligned vertically in parallel at a distance from one another and between which at least one horizontal runner (18) is secured, on which at least one carriage (16a, 16b) carrying controllable elements (7a, 7b) is longitudinally displaceably mounted by means of rollers (20), and these plates having slots (S) associated with the moving range of the elements (7a, 7b).

16. Device according to claim 15, **characterised in that** two runners (18) are secured between the plates (4') in parallel at a distance from one another, respective carriages (16a, 16b) are mounted on the sides of the runners directed towards one another and the slots (S) in the plates (4') are situated in the region between the runners (18).

17. Device according to claim 15 or claim 16, **characterised in that** each carriage (16a, 16b) is secured to a traction means (24a, 24b) forming a closed loop which can be driven reversibly by one of the drives (5a, 5b).

18. Device according to at least one of claims 7 to 17, **characterised in that** the drives (5a, 5b) can be driven in synchronisation with a packaging machine by a control unit (31) and the single-article length of the device can be steplessly adjusted or programmed by the control unit (31).

19. Device according to claim 13 or claim 14, **characterised in that** the ready position and the working position of the elements (7a, 7b) are determined by stops (38, 39) arranged at a distance from one another in the conveying direction (LR).

20. Device according to claim 19, **characterised in that** at least one of the stops (38, 39) is adjustable parallel to the transport path.

## Revendications

1. Dispositif (1) pour grouper ou isoler des articles (6) qui sont transportés selon une ou plusieurs files fermées sur une bande transporteuse (8) ou similaire et qui, pour être traités ultérieurement, sont extraits individuellement ou par groupes,
**caractérisé en ce qu'**
il existe au moins deux éléments (7a, 7b) pouvant, indépendamment l'un de l'autre, être avancés ou reculés parallèlement à la direction de transport (LR) et, en étant commandés indépendamment l'un de l'autre, être amenés en prise ou cesser de l'être avec les articles (6).

2. Dispositif selon la revendication 1,
**caractérisé en ce que**
les éléments (7a, 7b), quand ils sont déplacés dans le sens de transport (LR), prennent une position de travail où ils sont en prise avec les articles (6) situés sur la bande de transport, tandis que par un mouvement en sens inverse sur la même voie, ils peuvent être amenés à une position d'attente située à une certaine distance des articles.

3. Dispositif selon la revendication 1 ou 2,
**caractérisé en ce qu'**
au moins deux éléments (7a, 7b), mobiles indépendamment l'un de l'autre, sont associés à chaque piste dans le cas où le flux des articles s'effectue selon plusieurs pistes.

4. Dispositif selon une des revendications 1 à 3,
**caractérisé en ce que**
deux éléments (7a, 7b), mobiles indépendamment l'un de l'autre, se trouvent sur chacun des côtés opposés d'une piste de transport.

5. Dispositif selon au moins une des revendications 1 à 4,
**caractérisé en ce que**
sur un côté d'une piste de transport sont disposés au moins deux éléments (7a, 7b) pouvant avancer et reculer indépendamment l'un de l'autre dans des plans décalés en hauteur.

6. Dispositif selon la revendication 4 ou 5,
**caractérisé en ce que**
sur chacun des côtés opposés d'une piste de transport se trouvent deux éléments (7a, 7b) pouvant avancer et reculer indépendamment l'un de l'autre dans des plans décalés en hauteur, les éléments situés des deux côtés en vis à vis dans un plan commun pouvant être entraînés en synchronisme de position.

7. Dispositif selon au moins une des revendications 1 à 6,
**caractérisé en ce que**
des entraînements (5a, 5b) réversibles et indépendants l'un de l'autre, de préférence avec assistance électrique peuvent entraîner les au moins deux éléments (7a, 7b).

8. Dispositif selon au moins une des revendications 1 à 7,
**caractérisé en ce qu'**
il y a au moins deux groupes d'éléments (7a, 7b) et à chaque groupe est associé un entraînement propre (5a, 5b) indépendant, de préférence avec assistance électrique, et tous les éléments appartenant à un groupe peuvent être déplacés par leur entraînement propre en synchronisme en maintenant leurs positions relatives.

9. Dispositif selon au moins une des revendications 1 à 8,
**caractérisé en ce que**
des garde-corps (4) maintiennent les articles sur la voie de transport, ils déterminent les pistes de transport et les éléments (7a, 7b) sont montés mobiles sur les garde-corps (4).

10. Dispositif selon la revendication 9,
**caractérisé en ce que**
les éléments (7a, 7b), en position d'attente, se trouvent entièrement à l'intérieur des garde-corps (4), tandis que qu'en position de travail, ils dépassent au moins partiellement des garde-corps pour se trouver sur la bande de transport des articles (6).

11. Dispositif selon la revendication 10,
**caractérisé en ce que**
les éléments (7a, 7b) disposés par paires sur un garde-corps (4) se déplaçent en même temps, et sont montés de manière qu'en position de travail ils dépassent des deux côtés du garde-corps pour pénétrer sur les deux voies de transports d'articles parallèles au garde-corps.

12. Dispositif selon au moins une des revendications 1 à 11,
**caractérisé en ce que**
les éléments (7, 7a, 7b) sont montés basculant autour d'un axe vertical (21, 34), sur des chariots (16, 16a, 16b) mobiles parallèlement à la voie de transport des articles (6) et sont en forme de cames.

13. Dispositif selon la revendication 12,
**caractérisé en ce qu'**
un organe de manoeuvre (22, 35, 36) qui peut être commandé pour faire passer les éléments (7a, 7b) de la position d'attente à la position de travail et inversement est associé aux chariots (16, 16a, 16b).

14. Dispositif selon la revendication 12 ou 13,
**caractérisé en ce qu'**
un chariot (16, 16a, 16b) porte chaque fois deux éléments (7a, 7b) montés pivotants dans des sens opposés, accouplés par un engrenage (23, 37) et peuvent être actionnés par un organe de manoeuvre commun (22, 35, 36).

15. Dispositif selon au moins une des revendications 1 à 14,
**caractérisé en ce que**
des pistes de transport sont formées par les garde-corps (4) qui fixent la voie de transport des articles (6), ils se composent chacun de deux plaques (4') verticales, parallèles et espacées l'une de l'autre, entre lesquelles est fixé au moins un rail de circulation (18) horizontal sur lequel peut se déplacer au moins un chariot (16a, 16b) équipé de galets de roulement (20) et portant des éléments commandables (7a, 7b), ces plaques présentant des fentes (S) associées à la zone de déplacement des éléments (7a, 7b).

16. Dispositif selon la revendication 15,
**caractérisé en ce que**
deux rails de circulation (18), parallèles et espacés, sont fixés entre les plaques (4'), et un chariot (16a, 16b) est monté sur les côtés en regard de chacun de ces rails, les fentes (S) dans les plaques (4') se trouvant dans la zone située entre les rails (18).

17. Dispositif selon la revendication 15 ou 16,
**caractérisé en ce qu'**
à chaque chariot (16a, 16b) est fixé un moyen de traction (24a, 24b) formant une boucle fermée et il peut être entraîné d'une manière réversible par un des entraînements (5a, 5b).

18. Dispositif selon au moins une des revendications 7 à 17,
**caractérisé en ce que**
les entraînements (5a, 5b) peuvent être activés par une commande (31) en synchronisme avec une machine d'emballage, et la longueur de subdivision du dispositif peut être réglée ou programmée en continu dans la commande (31).

19. Dispositif selon la revendication 13 ou 14,
**caractérisé en ce que**
la position d'attente et la position de travail des éléments (7a, 7b) sont définies par des butées (38, 39) espacées selon la direction de transport (LR).

20. Dispositif selon la revendication 19,
**caractérisé en ce qu'**
au moins une des butées (38, 39) peut être déplacée parallèlement à la voie de transport.
